(19) Europäisches Patentamt
European Patent Office
Office européen des brevets

(11) **EP 4 773 600 A1**

(12) **EUROPEAN PATENT APPLICATION**

(43) Date of publication:
08.07.2026 Bulletin 2026/28

(21) Application number: 25305011.6

(22) Date of filing: 06.01.2025

(51) International Patent Classification (IPC):
*H04N 19/105* (2014.01)   *H04N 19/11* (2014.01)
*H04N 19/176* (2014.01)   *H04N 19/593* (2014.01)

(52) Cooperative Patent Classification (CPC):
H04N 19/105; H04N 19/11; H04N 19/176;
H04N 19/593

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **CHEN, Ya**
**35700 RENNES (FR)**
• **BORDES, Philippe**
**35890 LAILLE (FR)**
• **RADOSAVLJEVIC, Milos**
**35000 RENNES (FR)**
• **RATH, Gagan Bihari**
**35000 RENNES (FR)**

(74) Representative: **Interdigital
Immeuble ZEN 2
845 A, avenue des Champs Blancs
35510 Cesson-Sévigné (FR)**

(54) **REGRESSION-BASED WEIGHTS FOR BLOCK VECTOR (BV) MODES**

(57)     Methods and apparatuses for encoding/decoding a video are provided wherein at least two prediction blocks for a current block of an image of the video are obtained and wherein at least one of the at least two prediction blocks is obtained using a block vector-based prediction. The at least two prediction blocks are blended to provide a predicted block, wherein the blending uses blending weights determined from a template of the current block and the current block is encoded or decoded based on the predicted block.

**FIG. 15**

## Description

### BACKGROUND

The present application is related to video compression. The present embodiments relate to a method and an apparatus for encoding or decoding an image or a video. More particularly, the present embodiments relate to improving block vector-based prediction in video compression system.

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. In inter prediction, motion vectors used in motion compensation are often predicted from motion vector predictor. To reconstruct the video, the compressed data are decoded by inverse processes corresponding to the entropy coding, quantization, transform, and prediction.

### BRIEF SUMMARY

Briefly stated, in one embodiment, a method for video encoding is provided wherein at least two prediction blocks for a current block of an image or a video are obtained and wherein at least one of the at least two prediction blocks is obtained using a block vector prediction. The at least two prediction blocks are blended to provide a predicted block, wherein the blending uses blending weights determined from a template of the current block and the current block is encoded based on the predicted block.

In another embodiment, a method for video decoding is provided wherein at least two prediction blocks for a current block of an image or a video are obtained and wherein at least one of the at least two prediction blocks is obtained using a block vector prediction. The at least two prediction blocks are blended to provide a predicted block, wherein the blending uses blending weights determined from a template of the current block and the current block is decoded based on the predicted block.

In another embodiment, an apparatus for video encoding is provided, the apparatus comprises one or more processors configured to obtain at least two prediction blocks for a current block of an image or a video, wherein at least one of the at least two prediction blocks is obtained using a block vector prediction; blend the at least two prediction blocks to provide a predicted block, wherein the blending uses blending weights determined from a template of the current block; and encode the current block based on the predicted block.

In another embodiment, an apparatus for video decoding is provided, the apparatus comprises one or more processors configured to obtain at least two prediction blocks for a current block of an image or a video, wherein at least one of the at least two prediction blocks is obtained using a block vector prediction; blend the at least two prediction blocks to provide a predicted block, wherein the blending uses blending weights determined from a template of the current block; and decode the current block based on the predicted block.

In another embodiment, a method for video encoding is provided, the method comprising obtaining at least two prediction blocks for a current block of an image or a video, blending the at least two prediction blocks to provide a predicted block using blending weights determined from a template of the current block; and encoding the current block based on the predicted block. The method comprises signaling a first flag indicating that the blending uses weights determined from a template of the current block (regression-based weights) and a second flag indicating whether at least one of the at least two prediction blocks is obtained using a block vector prediction.

In another embodiment, a method for video decoding is provided, the method comprising decoding a first flag indicating that a current block of an image or a video is decoded using a blending of at least two prediction blocks usings weights determined from a template of the current block (regression-based weights), decoding a second flag indicating whether at least one of the at least two prediction blocks is obtained using a block vector prediction, obtaining the at least two prediction blocks for the current block based on the second flag, blending the at least two prediction blocks to provide a predicted block using blending weights determined from the template of the current block; and decoding the current block based on the predicted block.

In other embodiment, apparatus for encoding or decoding a video according to the method mentioned above is provided.

In another aspect, a computer readable storage medium is provided, the medium having stored thereon a bitstream comprising coded data relative to a video and at least one of a flag indicating that blending weights are determined using the template (or using a regression-based method) and/ or an index of a candidate selected in a candidate list built according to an embodiment described herein.

In another aspect, a non-transitory computer readable medium storing executable program instructions to cause a computer executing the program instructions to perform the method mentioned above according to any one of the embodiments described herein is provided.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;

FIG. 2 is a block diagram illustrating an example video encoder according to one or more embodiments of the present disclosure;

FIG. 3 is a block diagram illustrating an example video decoder according to one or more embodiments of the present disclosure;

FIG. 4 illustrates examples of geometric partitions;

FIG. 5 illustrates examples of geometric partitions with angle (left) and distance offset (right) of the partition line;

FIG. 6 illustrates an example of geometric partition mode (GPM) blending area;

FIG. 7 illustrates an example of templates used for the regression-based algorithm to determine blending weights;

FIG. 8 illustrates an example a method for building a list of RGPM candidates;

FIG. 9 illustrates an example of signaling geometric partitioning data for a block coded in a Geometric Partitioning Mode;

FIG. 10 illustrates an example of signaling geometric partitioning data for a block coded in a Spatial Geometric Partitioning Mode;

FIG. 11 illustrates an example of a method for encoding or decoding a block according to an embodiment;

FIG. 12 illustrates an example of a method for encoding or decoding a block according to another embodiment;

FIG. 13 illustrates an example of signaling geometric partitioning data for a block coded in a Geometric Partitioning Mode that uses a block vector-based prediction;

FIG. 14 illustrates an example of a scanning of a candidate lists for building a RGPM candidate list;

FIG. 15 illustrates an example of a method for encoding or decoding a block according to another embodiment;

FIG. 16 shows two remote devices communicating over a communication network in accordance with an example of the present principles.

FIG. 17 shows the syntax of a signal in accordance with an example of the present principles.

FIG. 18 shows an example of syntax for signaling an IBC coded block blending two predictions with regression-based weights according to an embodiment;

FIG. 19 shows an example of syntax for signaling a coded block blending two predictions with regression-based weights according to an embodiment;

FIG. 20 shows an example of syntax for signaling a coded block blending two predictions with regression-based weights according to another embodiment;

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

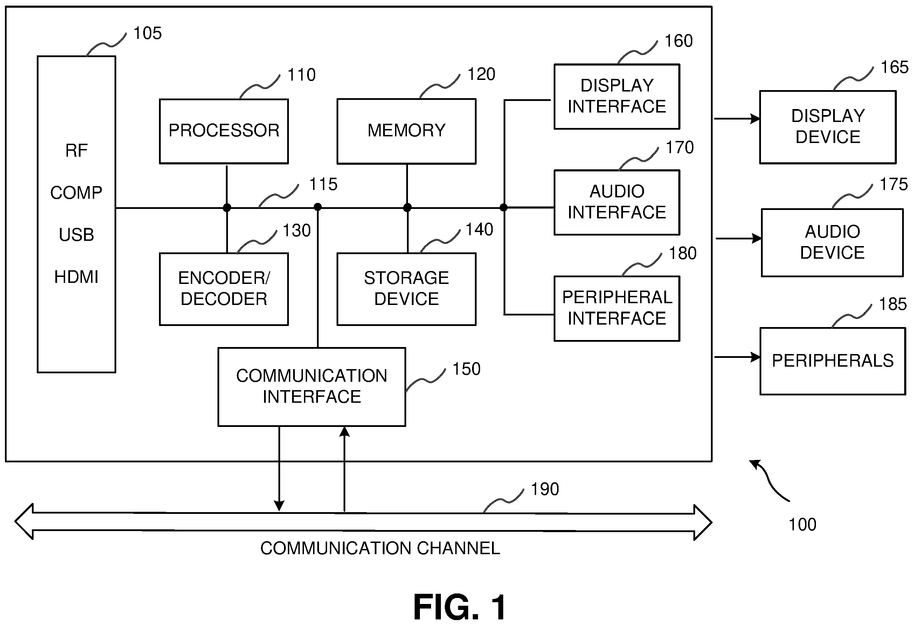

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

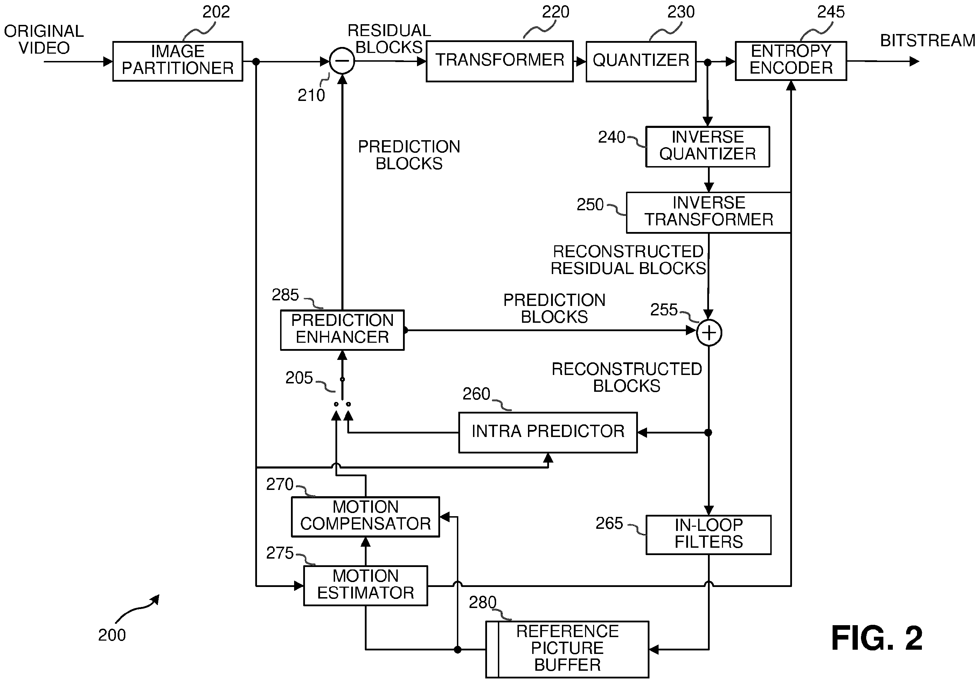

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

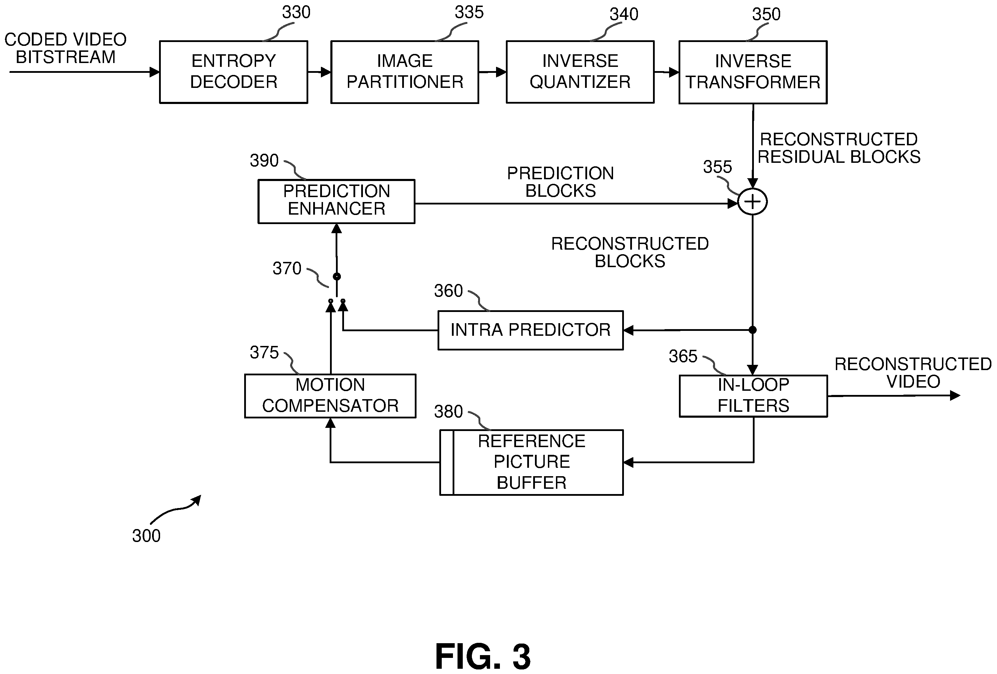

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340, and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Embodiments described herein provides for applying regression-based weights for block-vector (BV based prediction modes), for example, such as IBC-GPM mode, GPM-inter-IBC mode, IBC-CIIP mode, IBC BVP merge mode, and bi-predictive IBC merge mode. An aim is to improve compression efficiency, that is, to reduce the bitrate while maintaining the quality, or equivalently to improve the quality while maintaining the bitrate.

Embodiments described herein provides for modifying prediction modes that uses BV-based prediction. The embodiments described herein can be implemented in a video encoder (200 in FIG. 2), for example in the intra predictor module (260), or prediction enhancer module (285) and in a video decoder (300 in FIG. 3) for example in the intra predictor module (360), or prediction enhancer module (390).

Geometric Partitioning Mode (GPM)

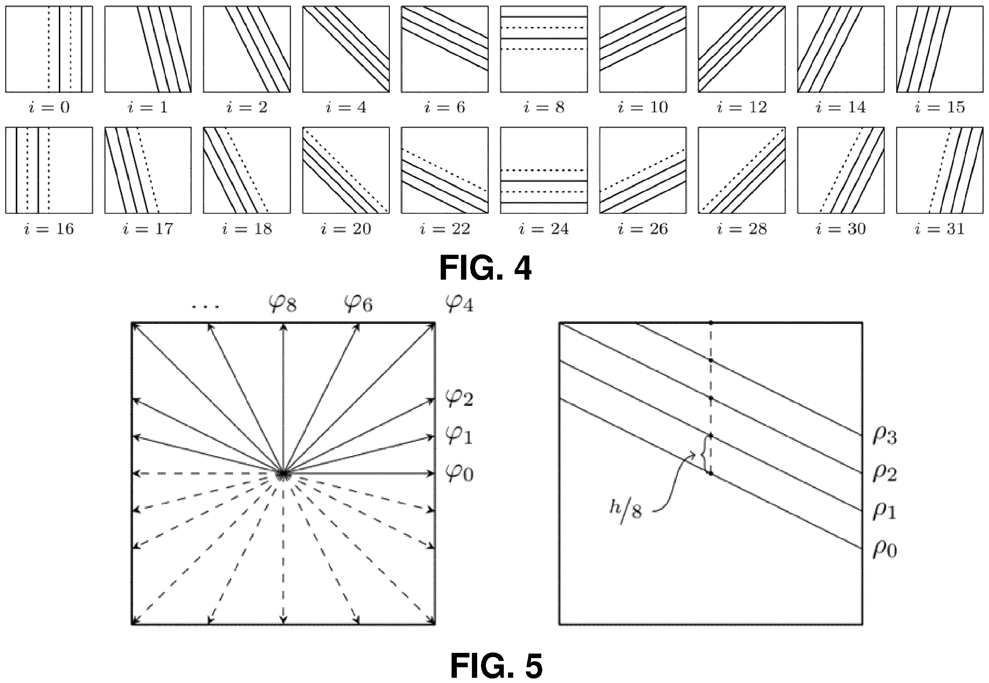

In VVC and ECM, a geometric partitioning mode (GPM) has been proposed with 64 partitions (as examples shown in FIG. 4) in total for inter prediction. When the GPM is used, a CU is split into two partitions by a geometrically located straight line (as examples shown in FIG. 5). The location of the splitting line is mathematically derived from the angle $\varphi_i$ and distance offset $\rho_i$ of a specific partition. Each partition in the CU is inter-predicted using its own motion parameters; only uni-prediction is allowed for each partition, that is, each partition has one motion vector (MV) and one reference index. After predicting each of the partitions, the sample values along the splitting edge are adjusted using a blending process with adaptive weights.

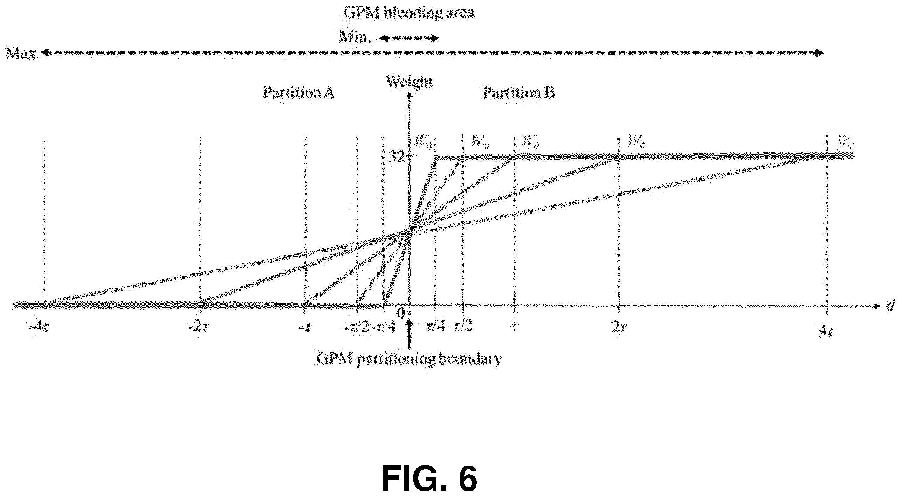

On top of VVC, ECM implements adaptive blending at 1/32 precision to smooth the transition in-between the two predictions near the split boundary as depicted in FIG. 6. A CU level index is coded to signal the selected blending area size among up to 5 area size.

GPM with inter and intra prediction (GPM-Intra)

In GPM with inter and intra prediction (GPM-Intra), one partition is predicted using inter predicted samples and the other partition is predicted using intra predicted samples. The final prediction samples of the CU are generated by weighting inter predicted samples and intra predicted samples from each GPM-separated region, for example using the GPM blending area mechanism. The inter predicted samples are derived by the same scheme as the GPM in the current VVC and ECM whereas the intra predicted samples are derived by an intra prediction mode (IPM) candidate list and an index signaled from the encoder.

GPM with inter prediction and Intra Block Copy (GPM-Inter-IBC)

In GPM with inter prediction and intra block copy (GPM-Inter-IBC), proposed in JVET-AH0091 (Y. Wang, K. Zhang, L. Zhang, "Non-EE2: Geometry partitioning mode with inter prediction and intra block copy", document JVET-AH0091, 34th Meeting, Rennes, FR, 17-24 April 2024), the two geometric sub-partitions are predicted using inter prediction and IBC (Intra Block Copy), individually. To generate the prediction signal of IBC prediction mode, an IBC candidate list is constructed, and the index of the block vector that is selected to obtain the prediction for the current CU is signaled. The prediction signal of IBC for one sub-partition can be blended with the inter predicted samples derived by the same scheme as the GPM in the current VVC and ECM for the other sub-partition.

Spatial Geometry Partition Mode (SGPM)

In Spatial Geometry Partition Mode (SGPM), each partition is predicted using intra prediction. The two intra predictions are then blended together according to its partition mode. An SGPM candidate list with each entry consisting of a pair of intra prediction modes and a partition mode is built. There are 26 geometry partitioning modes (partition modes) in total. For each partition mode, an IPM (Intra Prediction Mode) candidate list is derived for each partition which contains 3 conventional intra prediction modes and up to 6 block-vector (BV) based prediction candidates obtained from the adjacent and non-adjacent blocks coded by BVs. The BV mode includes IBC prediction mode and intra template matching prediction (IntraTMP).

The SGPM candidate list is reordered based on a SAD (Sum of Absolute Difference) cost of the template of the current block and the first 16 candidates with smallest cost on the template are retained. Furthermore, the blending area is fixed and derived from the CU size.

Intra block copy with GPM (IBC-GPM)

Intra block copy with GPM (IBC-GPM) is a coding tool which divides a CU into two sub-partitions geometrically. The prediction signals of the two sub-partitions are generated using respectively IBC prediction mode and intra prediction, or IBC prediction mode and IBC prediction mode. An IPM candidate list is constructed using the same method as GPM-Intra for the intra prediction, and the IPM candidate list size is pre-defined as 3. An IBC candidate list is also constructed. There are 48 geometry partitioning modes in total, which are divided into two geometry partitioning mode sets.

When IBC-GPM is used, an IBC-GPM geometry partitioning mode set flag is signaled to indicate whether the first or the second geometry partitioning mode set is selected, followed by the geometry partitioning mode index indicating the geometry partitioning mode to use in the selected geometry partitioning mode set. An IBC-GPM intra flag is signaled to indicate whether intra prediction is used for the first sub-partition. When intra prediction is used for a sub-partition, an intra prediction mode index is signaled. When IBC is used for a sub-partition, a merge index is signaled.

Regression-based GPM (RGPM)

The regression-based GPM (RGPM), proposed in JVET-AG0112 (P. Bordes, K. Reuzé, F. Galpin, F. Urban, K. Naser, F. Le L6annec, E. Francois, "EE2-2.11: Regression-based GPM blending (tests a,b,c)", document JVET-AG0112, 33rdJVET Meeting, by teleconference, 17-26 January 2024), further enhances GPM by allowing higher flexibility in the definition of the splitting line position, direction, and the blending area. Besides, all these parameters can be implicitly derived from the template so that the signaling is reduced.

In GPM, the final prediction samples are generated by blending the two prediction signals using weighted average. Practically, two integer blending matrices (W0 and W1) are built and the weights in the GPM blending matrices are derived from the area size parameter based on the displacement from a predicted sample position to the GPM partitioning boundary (as shown in FIG. 6).

RGPM models the blending matrices as an affine linear function of the sample positions (x,y) in the current CU (eq.1):

$$W0(x,y) = a * x + b * y + c \ and \ W1(x,y) = 1 - W0(x,y)$$

Similar to the blend area of GPM, this model design ensures that the weights with the same values are distributed along a line. Spatially varying weights are thus provided for the final prediction samples. The $W0(x, y)$ is defined as a parametric function that depends on parameters estimated from template samples. The parameters (a, b, c) are derived from the template using a regression-based algorithm. This regression-based algorithm aims at minimizing a distance (for instance Mean-square-error, LSM) between reconstructed samples of the template of the current block and the weighted prediction samples of the template derived from the two extended uni-predictions $P_i$ templates.

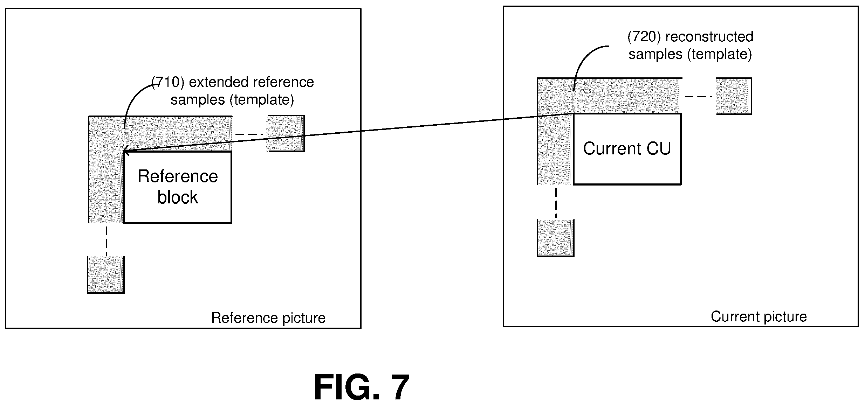

The inputs to the regression-based process are (as shown in FIG. 7):

- The two extended uni-predictions $P_i$, i=0,1 which correspond respectively to the templates of the prediction signals. As shown in FIG. 7, the template corresponds to the extended reference samples 710, they are the template of the reference block obtained by motion compensation of the current block;
- The reconstructed samples of the template of the current block (720 as shown in FIG. 7).

The output of the regression-based process are the parameters {a, b, c}. The parameters (a,b,c) can be derived from the reference template using the same solver (MSE minimization) as the one used for CCCM (Convolutional Cross-Component Model) , GLM (Gradient Linear Model) or GL-CCCM. (Gradient and Location based Convolutional Cross-Component Model).

The blended GPM sample at position (x,y) in the current block or the template is obtained as follows (eq.2):

$$P_{RGPM}(x, y) = W0(x, y) \times P_0(x, y) + \left(1 - W0(x, y)\right) \times P_1(x, y)$$

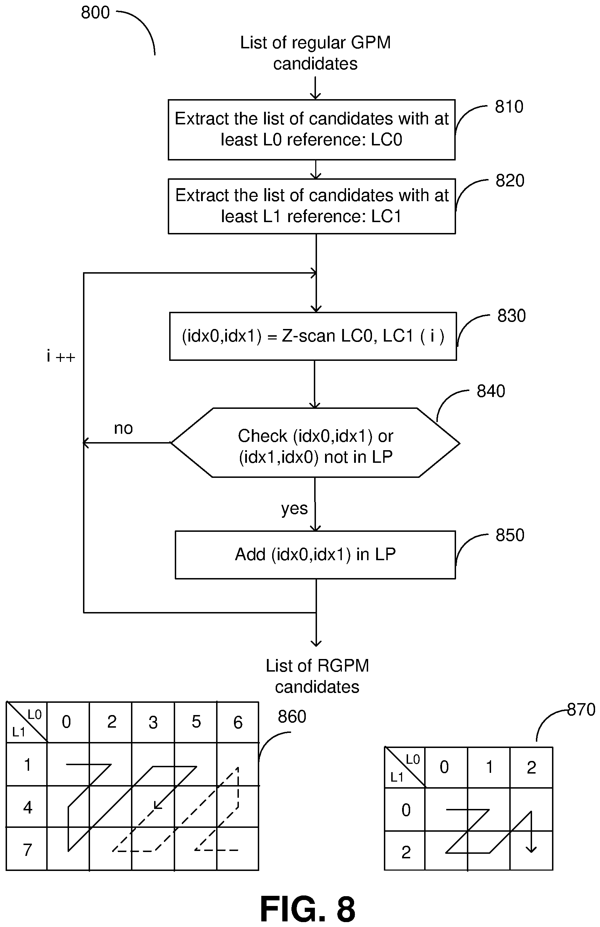

The list of pair of inter candidates can be built for example as depicted in FIG. 8 (800) so that the first partition uses at least one candidate from reference frame list L0 and the second partition uses at least one candidate from reference frame list L1. Tables (860) and (870) in FIG. 8 illustrates examples of candidates list from each reference frame lists L0 and L1. One may scan the list of candidates with at least one reference is L0 (810) and the list of candidates with at least one reference is L1 (820) in raster scan or Z-scan (830). A test (840) checks whether the pair of candidate indexes has vectors and references which are different from previously scanned/listed pairs, or if the pair is made of same candidate indexes as one previously scanned/listed pair of indexes. In the first case, the pair is added to the list (850), in the other case it is discarded.

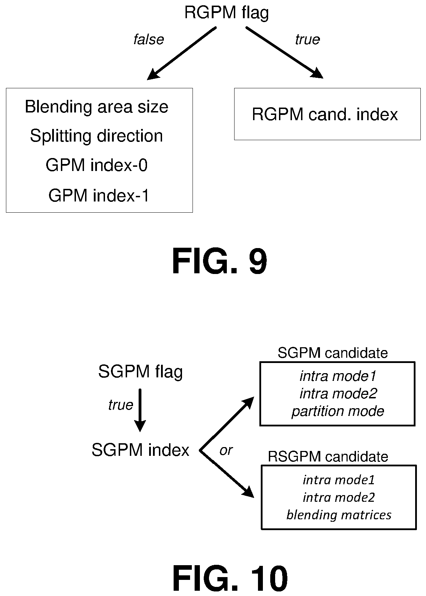

Because the splitting boundary parameters and blending area are implicitly derived from the template, the signaling of RGPM mode is significantly simpler compared to the regular GPM, as depicted in the example of FIG. 9. If the RGPM flag is true, an index is signaled that indicates the RGPM candidate in the list built with the process shown in FIG. 8, otherwise (RGPM flag is false) regular signaling is used: an index to signal a selected blending area size, an index to signal a splitting direction and an index for each sub-partition to signal the motion candidate in the partition's candidate list.

Regression-based SGPM blending (RSGPM)

A Regression-based SGPM blending (RSGPM) method is proposed in JVET-AI0102 (X. Li, R. Liao, J. Chen, Y. Ye, "Non-EE2: Regression-based SGPM blending", document JVET-A10102, 35th Meeting, Sapporo, JP, 12-19 July 2024) to extend the concept of RGPM method from GPM in inter prediction to SGPM in intra prediction to further improve the usage of RGPM. The SGPM candidate list is further extended with RSGPM candidates as shown in of FIG. 10. If the SGPM flag is true, an SGPM index is signaled to that can indicate either a SGPM candidate or a RSGPM candidate. Each RSGPM candidate contains two intra prediction modes (intra mode 1, intra mode 2) which are selected from the primary most probably mode (MPM) list and up to 6 block vectors of adjacent and non-adjacent blocks. Two integer blending matrices are derived from the template for each RSGPM candidate as in (eq.1) and (eq. 2).

The existing SGPM candidates and the proposed RSGPM candidates are reordered together and the first 16 candidates with smallest SAD cost on the template are retained (same as in ECM), so that there is no additional signaling. If an RSGPM candidate is selected, the two intra prediction modes are used to predict the current block and blended with the derived blending matrices, otherwise the current block is predicted using the regular SGPM described above.

Combined Intra Block Copy and intra prediction (IBC-CIIP)

Combined intra block copy and intra prediction (IBC-CIIP) is a coding tool for a CU which uses IBC and intra prediction to obtain two prediction signals, and the two prediction signals are weighted summed to generate the final prediction as follow (eq.3):

$$P = (w_{ibc} * P_{ibc} + ((1 \ll shift) - w_{ibc}) * P_{intra} + (1 \ll (shift - 1))) \gg shift$$

wherein $P_{ibc}$ and $P_{intra}$ denote respectively the IBC prediction signal and intra prediction signal. ($w_{ibc}$, *shift*) are set equal to (13, 4) for IBC merge mode and to (1, 1) for IBC BVP mode.

IBC BVP-merge and bi-predictive IBC merge

IBC-BVP-merge prediction mode is similar to the AMVP-merge prediction mode which uses one merge prediction and one AMVP prediction that are averaged together to become a new inter prediction mode.

The IBC-BVP merge prediction mode derives one BV from an IBC BVP mode and one BV from an IBC merge mode to form a bi-prediction for IBC. Two different indices are signaled: one for the IBC BVP candidate and another for the IBC merge candidate. Each BV provides a prediction signal which are then averaged to generate the final prediction for a current CU.

The IBC BVP mode can be seen as an inter AMVP mode wherein the block vector used to obtain the prediction block is obtained from a block vector predictor (BVP) as a BV from a candidate list to which a block vector difference (BVD) is added.

The IBC merge mode can be seen as an inter merge mode wherein the block vector used to obtain the prediction block is obtained from a block vector predictor (BV) obtained from a candidate list. In these two modes, the candidate lists can be constructed differently for example following the mechanisms of AMVP and merge candidate lists respectively.

In bi-predictive IBC merge mode, two BVs from the existing IBC merge candidate list are derived, utilizing two different indices, which are signaled. The Bi-predictive IBC merge mode can be enabled together with MBVD. In this case, the BV is refined from the BVP derived from the candidate list to which a BVD (block vector difference) is added, the BVD value being signaled via an index.

The two prediction signals obtained are averaged to generate the final prediction for a current CU.

As explained above, the RGPM model supports partitions predicted with either inter-prediction or intra-prediction, which enhances GPM and SGPM prediction modes by allowing higher flexibility in the definition of the splitting line position, direction, and the blending area. Besides, some of these parameters are implicitly derived from the template so that the signaling is reduced

As described above, some prediction modes use one or more block vectors and generate a prediction for a current CU from two prediction signals. Embodiments described herein provide for improving such block vector-based prediction modes by enabling these block vector-based prediction modes to use regression-based weights in the blending process.

Block vector -based prediction modes include for example intra block copy mode and intra template matching mode.

Some embodiments propose to extend regression-based weights for block vector (BV) based modes. This enriches the flexibility for the weighted average of two prediction signals wherein at least one prediction is a BV-based prediction.

An embodiment provides for blending prediction signals of the two sub-partitions using a regression-based blending matrix (matrix of blending weights) derived from a template, wherein at least one prediction is BV-based prediction. For example, this can be used for an IBC-GPM block and/or an GPM-inter-IBC block.

In a variant, a new candidate list is built with pairing a prediction mode index for the first sub-partition and another prediction mode index for the second sub-partition. This can be done for example for the proposed Regression-IBC-GPM block and/or the proposed Regression -GPM-inter-IBC block.

In another embodiment, two prediction signals are blended using a regression-based blending matrix (matrix of blending weights) derived from a template, at least one prediction is BV-based prediction. This can be used for example for an IBC-CIIP block; and/or an IBC BVP-merge block and or a bi-predictive IBC merge block.

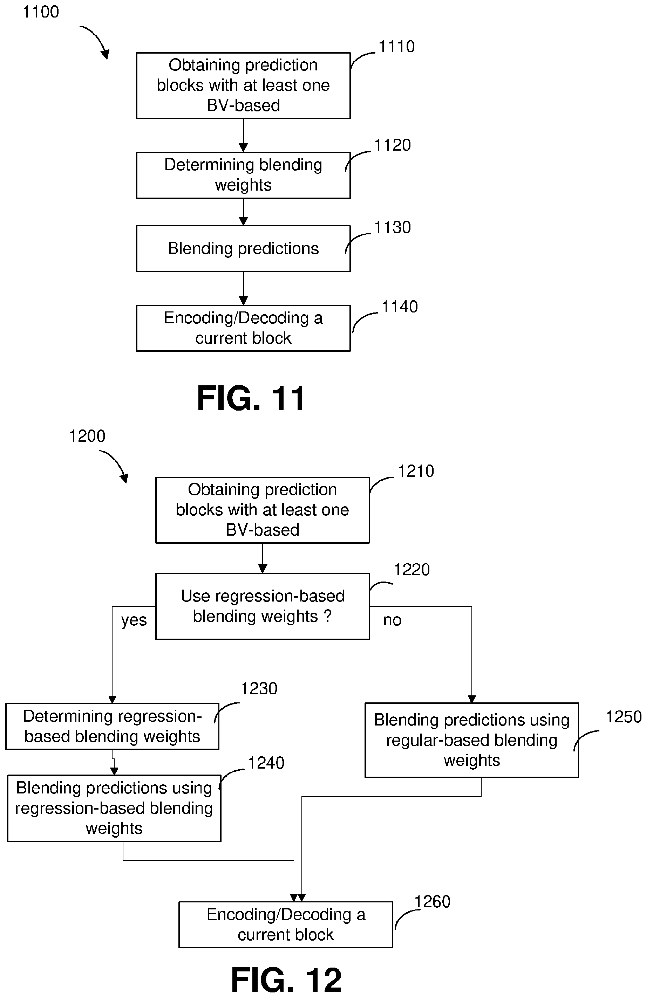

FIG. 11 illustrates, in a general embodiment, a method 1100 for encoding or decoding a current block that uses at least two prediction signals, with at least one prediction signal is obtained using BV-based mode. In this embodiment, the block can be coded using a geometric partitioning mode that provides prediction from sub-partitions of the block, or a bi-prediction mode that combines two or more predictions modes for the block. For example, the block is coded using any of the modes described above. At 1110, prediction blocks are obtained for a current block of a video to encode or decode. The prediction blocks are obtained by applying the prediction process corresponding to the prediction modes that are used to predict the current block. On the encoder side, combinations of two candidates taken from the first prediction mode's candidate list and the second prediction mode's candidate list are evaluated and the combination that provides the lowest rate-distortion cost is selected. Indices indicating the selected candidates in each list are signaled in a bitstream. On the decoder side, the indices are decoded to select the candidates in each list. The prediction blocks are obtained by applying the prediction mode associated to the selected candidates.

At 1120, the blending weights are determined using the reconstructed samples in the template of the current block and reconstructed samples in the template of the prediction blocks using the regression-based process as described above. At 1130, the blending weights are used to blend the prediction blocks to obtain a final prediction block for the current block. In a variant, on the encoder side, the determination of the blending weights and blending process using these determined weights are used when evaluating the candidates in the list.

At 1140, the current block is encoded or decoded using the final prediction block.

FIG. 12 illustrates an example of a method 1200 for encoding or decoding a current block according to another embodiment. The current block uses at least two prediction signals, with at least one prediction signal being obtained using BV-based mode. In this embodiment, the use of regression-based blending weights is enabled for the current block depending on some conditions. At 1210, prediction blocks are obtained for the current block of a video to encode or decode. The prediction blocks are obtained by applying the prediction process corresponding to the prediction modes that are used to predict the current block. At 1220, it is determined whether the blending weights to blend the two prediction blocks are determined using regression-based process or the regular blending process. The regular blending process can depend on the coding mode of the current block. For example, for a geometric partitioning mode such as IBC-GPM or GPM-inter-IBC, the regular blending process can be the blending process as described with FIG. 6, while for a bi-predictive mode such as IBC-CIIP, IBC-BVP-merge or bi-predictive IBC merge, the regular blending process can be an averaging process. In the document, the regular blending process provides regular blending weights which can also be referred as fixed weights or weights in the document by opposition to the regression-based blending weights that are determined from a template of the current block to encode or decode. The regular blending weights are fixed blending weights in a sense that they do not vary with reconstructed samples of the template but are either fixed (averaging) or determined using signaled parameters, such as splitting direction and position and blending area size (FIG. 6).

At 1220, in a variant, the determination is based on a flag indicating whether regression-based blending weights are used or not. On the encoder side, the flag is signaled in a bitstream with the data encoding the block. On the decoder side, the flag is decoded at the block level.

In another variant, the determination can be based on a size of the block, for example if the current block is larger than a given size, regression-based blending weights are used. In another variant, the determination is based on the prediction modes providing the prediction blocks. For example, regression-based blending weights are used only if both the two prediction blocks are obtained with BV-based modes. In another variant, the determination is based on a flag inherited from a candidate block used to obtain the prediction block that is obtained using BV based mode.

If at 1220, it is determined that regression-based blending weights are used, then at 1230, the blending weights are determined using the reconstructed samples in the template of the current block and reconstructed samples in the template of the prediction blocks using the regression-based process. At 1240, the blending weights are used to blend the prediction blocks to obtain a final prediction block for the current block.

Otherwise, at 1250, the regular blending process is used for obtaining the final prediction block from the prediction blocks.

At 1260, the current block is encoded or decoded using the final prediction block.

Extending regression-based weights for IBC-GPM and GPM-inter-IBC

In this embodiment, RGPM concept for inter GPM block is extended and applied for IBC-GPM block and/or GPM-inter-IBC, to further adapt the blending weights and the blending area.

This embodiment proposes that prediction signals of the two sub-partitions are blended using a blending matrix (matrix of blending weights), wherein at least one prediction is block-vector (BV) based prediction. In a variant of this embodiment, the blending matrix could either be derived from signaled syntax elements, and/or derived as a regression-based function from reconstructed samples in the template. The BV based prediction includes IBC mode and intra template matching prediction (IntraTMP).

For example, for samples to be blended along a splitting line inside a blending area of an IBC-GPM block, and/or of an GPM-inter-IBC block, blending matrices are derived from the template using a regression-based algorithm as eq.1.

In a variant, an RGPM_IBC flag is signaled at the block level to indicate whether regression-based blending matrices or regular GPM blending matrices are used for an IBC-GPM block and/or an GPM-inter-IBC block. The regular GPM blending matrices correspond for example to the blending process as described with FIG. 6.

This RGPM_IBC flag could be decided by some SAD/SATD/RDO check at the encoder side, by selecting the blending process among the regression-based blending weights or regular blending weights.

In one variant of this embodiment, the usage of RGPM model for IBC-GPM and/or GPM-inter-IBC mode can be enabled based on some conditions/parameters, such as block size of the current block, QP, color components, slice types, content types, frame resolution and configuration. For example, RGPM could be only allowed and applied when the size of the current block or sub-partitions that uses IBC and/or inter block is larger than some predefined threshold (e.g., $(width_{current} \times height_{current}) > 4 \times 4)$.

In another variant of this embodiment, RGPM model for IBC-GPM mode can only be allowed when both sub-partitions are BV-based predictions.

When RGPM_IBC flag is true, instead of signaling an IBC merge index for a sub-partition, and an IBC merge index/Inter merge index/Intra prediction mode index for another sub-partition, a variant of this embodiment proposes building a RGPM-IBC candidate list with pairing a prediction mode index for the first sub-partition and another prediction mode index for the second sub-partition, so that each RGPM-IBC candidate contains two prediction modes which are used for IBC-GPM and/or GPM-inter-IBC mode.

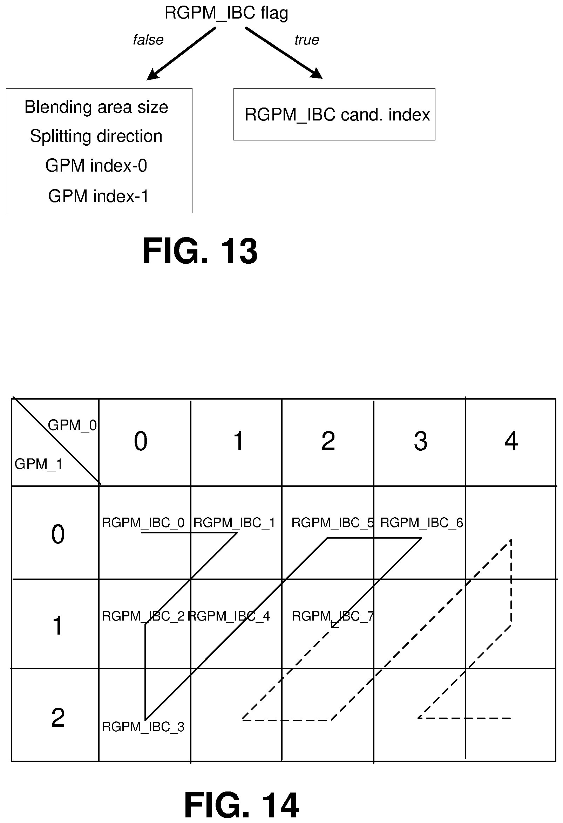

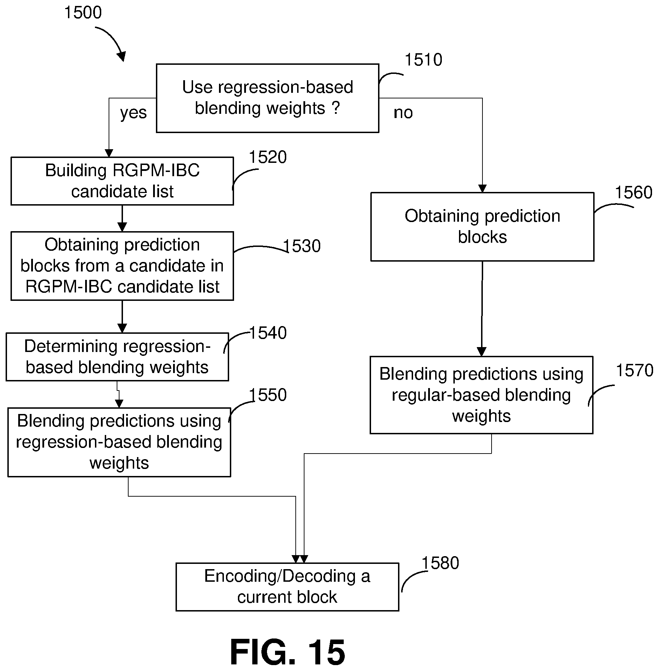

FIG. 15 illustrates an example of a method 1500 for encoding or decoding a current block according to this variant embodiment. At 1510, it is determined whether regression-based process is used for the current block. If yes, at 1520, the RGPM-IBC candidate list is built. FIG.14 illustrates an example for building the candidate list for RGPM-IBC mode which pairs two prediction modes together. GPM_0 and GPM_1 represents the prediction modes of the two sub-partitions of the current block. The candidates of each sub-partition's candidate list are paired to form a new candidate (RGPM_IBC_0, RGPM_IBC_1, ....). For example, one candidate from an IBC candidate list of the first sub-partition is extracted together with another prediction mode from an IBC candidate list/ Inter candidate list/ Intra candidate list of the second sub-partition, in raster scan or Z-scan. At 1530, prediction blocks are obtained for the current block from a candidate in the list built at 1520. On the encoder side, each candidate in the list is evaluated and the candidate that provides the lowest rate-distortion cost is selected. An index indicated the selected candidate is signaled in a bitstream. On the decoder side, the index is decoded to select the candidate in the list. The prediction blocks are obtained by applying the prediction modes paired by the selected candidate.

At 1540, the blending weights are determined using the reconstructed samples in the template of the current block and reconstructed samples in the template of the prediction blocks using the regression-based process. In a variant, on the encoder side, the determination of the blending weights and blending process using these determined weights are used when evaluating the candidates in the list.

At 1550, the blending weights are used to blend the prediction blocks to obtain a final prediction block for the current block.

Otherwise (no at 1510), at 1560, prediction blocks for the current block are obtained using a selected candidate in each sub partition's candidate list. At the encoder, indices are signaled to indicate which candidate in each sub partition's candidate list is selected. At the decoder, the indices are decoded to identify the selected candidates for each sub partition. At 1570, the regular blending process is used for obtaining the final prediction block from the prediction blocks.

At 1580, the current block is encoded or decoded using the final prediction block.

Therefore, a new RGPM_IBC_cand index could be signaled to indicate which pair of prediction modes is used, as depicted in the example of FIG. 13. If the RGPM_IBC flag is true, an index RGPM_IBC_cand is signaled that indicates the candidate in the list built at 1520, otherwise (RGPM_IBC flag is false) regular signaling is used: an index to signal a selected blending area size, an index to signal a splitting direction and an index for each sub-partition to signal a block vector candidate or an intra prediction mode in the partition's candidate list.

Because the splitting boundary parameters and blending area are implicitly derived from the template, the signaling of RGPM_IBC mode is significantly simpler compared to the regular IBC-GPM and GPM-inter-IBC mode.

When RGPM-IBC is used, for IBC-GPM mode, both the IBC-GPM geometry partitioning modes set flag that indicates whether the first or the second geometry partitioning mode set is selected and the geometry partitioning mode index are no more needed to be signaled; for GPM-inter-IBC mode, the geometry partitioning mode index is no more needed to be signaled.

In one variant of this embodiment, an IBC merge index and another IBC merge index could be paired together to become one RGPM-IBC candidate in the first RGPM-IBC list for IBC-GPM; and/or an IBC merge index and an intra prediction mode index could be paired together to become one RGPM-IBC candidate in the second RGPM-IBC list for IBC-GPM. In this variant, an IBC-GPM intra flag is still signaled to indicate which RGPM-IBC list is used for the first sub-partition.

In another variant of this embodiment, an IBC merge index, and another IBC merge index or an intra prediction mode index could be paired together to become one RGPM-IBC candidate in one single RGPM-IBC list for IBC-GPM. In this other variant, IBC-GPM intra flag does not need to be signaled since the prediction mode used for each sub-partition could be derived from the RGPM-IBC index.

In another variant of this embodiment, an IBC merge index and an inter prediction mode index could be paired together to become one RGPM-IBC candidate in one single RGPM-IBC list for GPM-inter-IBC.

In the embodiments described herein, regression-based blending process allows to blend two prediction blocks to obtain a final prediction block for a current block wherein a geometric partitioning of the block is provided implicitly by determining the affine parameters (a,b,c) of the regression-based model. These embodiments can be applied to any bi-predictive prediction mode, even though the bi-predictive prediction mode is not designed from a geometric partitioning mode splitting the current block into sub-partitions. The proposed regression-based blending process provides for implicit geometric partitioning of the current block for prediction mode operating on the whole current block. Thus, the proposed regression-based model allows to extend geometric partitioning to any prediction mode that combines two prediction blocks. Some embodiments below provide for an implicit geometric partitioning of such bi-predictive prediction mode.

Extending regression-based weights for IBC-CIIP

To further enrich the blending weights for BV based prediction, this embodiment proposes to blend two prediction signals using a blending matrix (matrix of blending weights), wherein one prediction is a BV-based prediction. This blending matrix is derived as a regression-based function from reconstructed samples in the template.

For example, in IBC-CIIP, when IBC prediction signal ($P_{ibc}$) and intra prediction signal $P_{intra}$ are blended, rather than using fixed and predefined weights, blending matrices $Wibc(x, y)$ could be applied and be derived from the template using a regression-based algorithm as eq.1.

The blended IBC-CIIP sample at position (x,y) could be obtained as follows (eq.4):

$$P_{Regression\_IBC\_CIIP}(x, y) = Wibc(x, y) \times P_{ibc}(x, y) + \big(1 - Wibc(x, y)\big) \times P_{intra}(x, y)$$

In a variant of this embodiment, a Regression_IBC_CIIP flag is signaled at the block level to indicate whether regression-based blending matrices or regular IBC_CIIP blending weights are used for an IBC-CIIP block. This Regression_IBC_CIIP flag could be decided by some SAD/SATD/RDO check at the encoder side.

In another variant of this embodiment, for IBC merge mode, the Regression_IBC_CIIP flag could be inherited from the BV merge candidate information or be inherited from neighboring IBC-CIIP blocks.

In another variant of this embodiment, regression-based blending matrices for IBC-CIIP mode can only be allowed when the IBC mode is used in IBC merge mode. In another variant, regression-based blending matrices for IBC-CIIP mode can only be allowed when the IBC mode is used in the IBC AMVP mode (IBC BVP mode).

In another variant of this embodiment, regression-based blending matrices for IBC-CIIP mode can be allowed based on some conditions/parameters, such as block size, QP, color components, slice types, content types, frame resolution and configuration.

Extending regression-based weights for IBC BVP-merge and bi-predictive IBC merge

In this embodiment, two BV-based prediction signals obtained from IBC BVP-merge mode or bi-predictive IBC merge mode are blended using a blending matrix (matrix of blending weights). This blending matrix could either be derived as a regression-based function from reconstructed samples in the template.

For example, in IBC BVP-merge mode, and/or in bi-predictive IBC merge mode, when two IBC prediction signals are blended, rather than using simple average, blending matrices could be applied and be derived from the template using a regression-based algorithm as eq.1.

In a variant of this embodiment, Regression_Bi_IBC flag is signaled at the block level to indicate whether regression-based blending matrices or simple averaging are used for an IBC BVP-merge block, and/or for a bi-predictive IBC merge block. This Regression_Bi_IBC flag could be decided by some SAD/SATD/RDO check at the encoder side.

In another variant of this embodiment, for bi-predictive IBC merge mode, Regression_Bi_IBC flag could be derived from these two BV merge candidates information. For example, the Regression_Bi_IBC flag could be true only when the Regression _Bi_IBC flags from both these two BV merge candidates are true. In another example, the Regression_Bi_IBC flag could be true as long as the Regression_Bi_IBC flag from one of these two BV merge candidates is true. Otherwise, the Regression_Bi_IBC flag could be inherited from neighboring bi-predictive IBC merge blocks.

In another variant of this embodiment, for IBC BVP-merge mode, the Regression_Bi_IBC flag could be derived from the BV merge candidate information. For example, the Regression_Bi_IBC flag for an IBC BVP-merge block could be true when the Regression_Bi_IBC flag from the BV merge candidate is true. Otherwise, Regression_Bi_IBC flag could be inherited from neighboring IBC BVP-merge blocks.

In another variant of this embodiment, regression-based blending matrices can only be allowed for IBC BVP-merge mode; or regression-based blending matrices can only be allowed for bi-predictive IBC merge.

In another variant of this embodiment, regression-based blending matrices for IBC BVP-merge mode and/or bi-predictive IBC merge mode, can be allowed based on some conditions/parameters, such as block size, QP, color components, slice types, content types, frame resolution and configuration.

Examples of syntax for signaling use of regression-based weights to blend one BV-based prediction and another intra/inter/BV-based prediction are provided below.

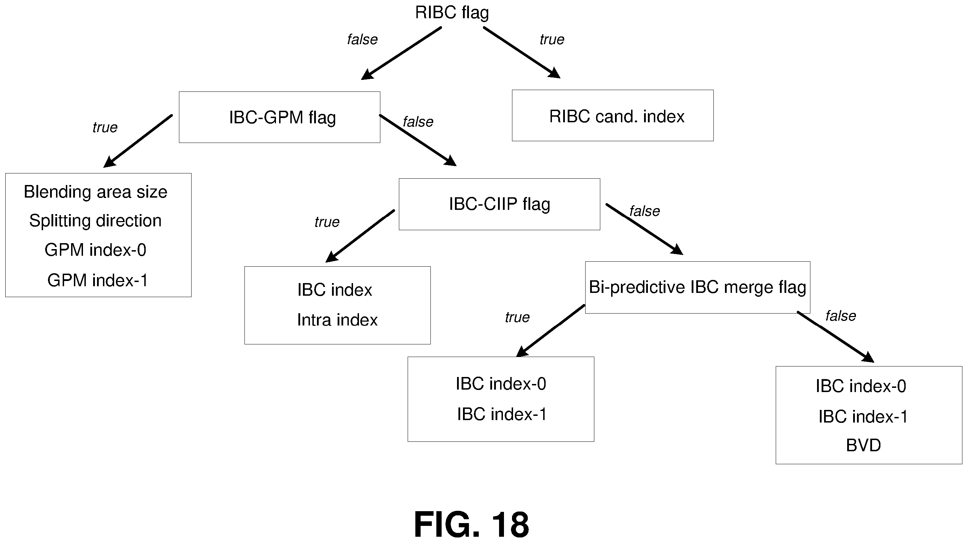

In this embodiment, a single Regression-IBC (RIBC) mode is proposed to blend one BV-based prediction and another intra/inter/BV-based prediction using a blending matrix (matrix of blending weights). As illustrated on FIG. 18, one RIBC flag is signaled to indicate that Regression-IBC is applied, and the related syntaxes/flags specifying those two prediction signals obtained from IBC-GPM mode, or IBC-CIIP mode, or bi-predictive IBC merge mode, are not signaled into the bitstream. When RIBC flag is true, a RIBC candidate list can be built wherein the RIBC candidate list comprises candidates that pair a prediction mode index for the first prediction and another prediction mode index for the second prediction. An RIBC candidate index is signaled to indicate which RIBC candidate from the RIBC candidate list is used, each RIBC candidate contains two prediction modes.

The RIBC candidate list can be built in a similar way as described with FIG. 14 taking into account additional candidates provided by an IBC merge candidate list derived in bi-predictive IBC merge mode and/or IBC candidates and intra candidates derived for IBC-CIIP mode. The RIBC candidate list can be limited to a given number of candidates and considers for example at least one candidate for IBC-GPM, at least one for IBC-CIIP and at least one for bi-predictive IBC merge mode if these candidates are available. Different numbers of candidates for each mode (IBC-GPM/ IBC-CIIP/ bi-predictive IBC merge) can also be considered.

When RIBC flag is false, syntax and flags signaling the IBC-GPM prediction mode, IBC-CIIP prediction mode and bi-predictive IBC merge mode can be used as explained above. For example, as depicted in FIG. 18, if RIBC flag is false, a flag IBC-GPM is checked, if its value is true then IBC-GPM syntax is written in/read from the bitstream. Otherwise (IBC-GPM flag is false), then an IBC-CIIP flag is checked, if its value is true then IBC-CIIP syntax is written in/read from the bitstream. Otherwise (IBC-CIIP flag is false), then a bi-predictive IBC merge flag is checked, if its value is true then bi-predictive IBC merge flag syntax is written in/read from the bitstream, otherwise (bi-predictive IBC merge flag is false) bi-predictive IBC merge flag syntax with block vector difference (BVD) is written in/read from the bitstream.

Thanks to the use of regression-based weights for combining prediction signals, this embodiment provides a unified syntax for signaling an IBC block that uses several prediction signals with at least one is BV-based wherein the prediction signals can be geometric partitioning mode that uses BV prediction and other BV-based predictions mode that combines several prediction signals. FIG. 18 depicts an example of such signaling.

Other signaling methods are possible considering more or less prediction modes. For example, the RIBC flag can be used to signal candidates in the RIBC candidate list that comprises only candidates for IBC-GPM mode and IBC-CIIP mode or for IBC-GPM mode and bi-predictive IBC merge mode of for IBC-CIIP mode and bi-predictive IBC merge mode.

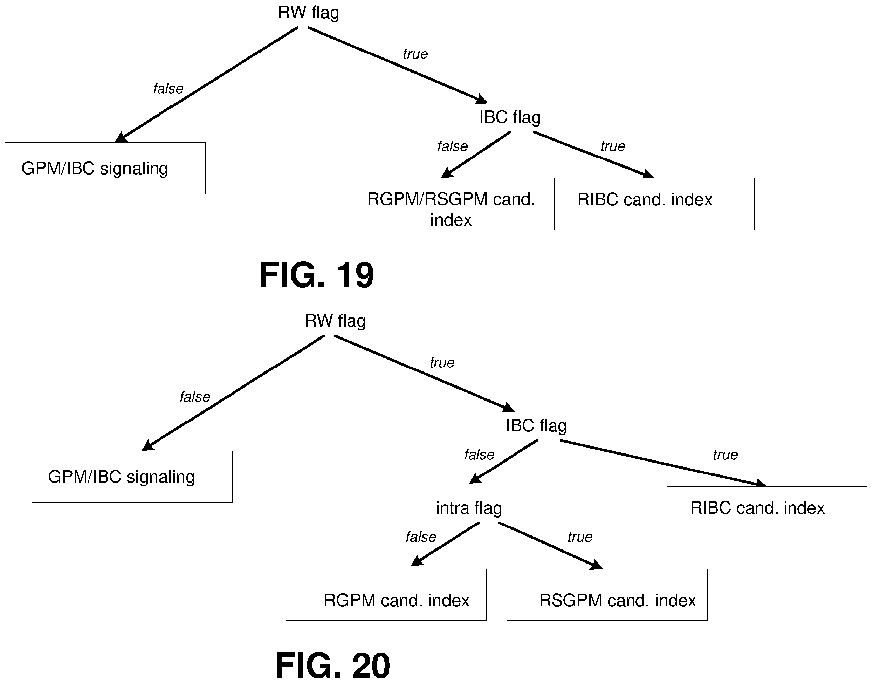

In another variant depicted in FIG. 19, another signaling can be used to unify the syntax with other regression-based prediction modes as described above, for example the RGPM mode described with FIG. 8-9 and/or RSGPM mode described with FIG. 10. In this variant, for example a RW flag is signaled at block level to indicate whether regression-based weights are used or not to combine two prediction signals for the block. If the flag is true, then an IBC flag can be used to indicate whether the signaled index (RIBC cand index/ RGPM/RSGPM cand index) indicates a candidate in the RIBC candidate list mentioned in the variant above or a candidate in the RGPM or RSGPM candidate lists mentioned with FIG. 8-10. In one variant, only one of the RGPM or the RSGPM can be available. In another variant, both RGPM and RSGPM can be available and selected for example based on the picture type (RSGPM for intra picture and RGPM for inter picture for example), or based on an additional flag (intra flag in FIG. 20) indicating which one is used between RGPM or RSGPM is signaled. This variant is illustrated on FIG. 20.

In the variant of FIG. 19, when the RW flag is false, explicit signaling of geometric partitioning modes and IBC modes is used in the classical way as described above.

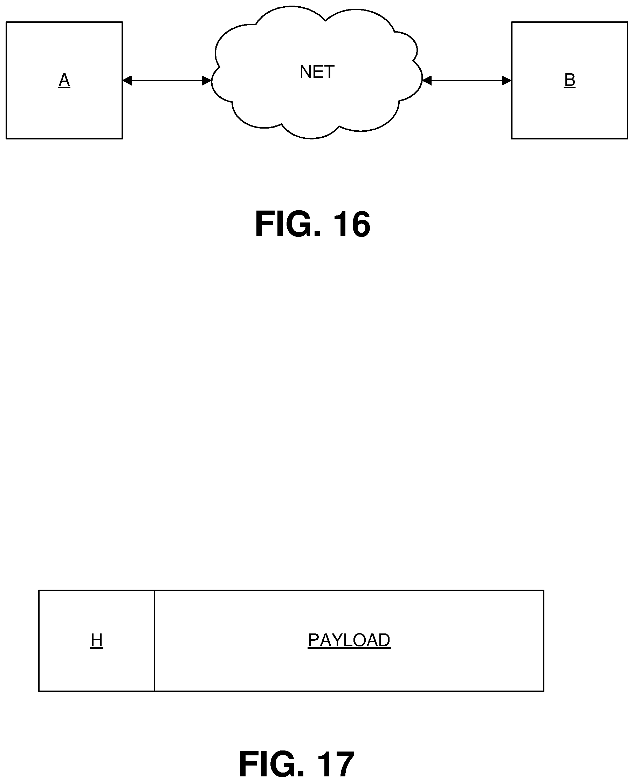

In an embodiment, illustrated in FIG. 16, in a transmission context between two remote devices A and B over a communication network NET, the device A comprises a processor in relation with memory RAM and ROM which are configured to implement a method for encoding an image or a video according to any one of the embodiments described herein and the device B comprises a processor in relation with memory RAM and ROM which are configured to implement a method for decoding an image or a video according to any one of the embodiments described herein. In accordance with an example, the network is a broadcast network, adapted to broadcast/transmit a coded video from device A to decoding devices including the device B.

FIG. 17 shows an example of the syntax of a signal transmitted over a packet-based transmission protocol. Each transmitted packet P comprises a header H and a payload PAYLOAD. In some embodiments, the payload PAYLOAD may comprise data representative of at least one part of an image, or a video encoded according to any one of the embodiments described above. The payload can also comprise any signaling as described above. For example, the signal comprises a flag indicating at a block level whether regression-based weights are used for blending prediction signals for the block and/or an index identifying in a candidate list a candidate pairing two candidates as described with FIG. 15, 18, 19 or 20.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. A bitstream that includes one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

    i. session description protocol (SDP), for example as described in RFCs and/or used in conjunction with real-time transport protocol (RTP) transmission.
    ii. hypertext transfer protocol (HTTP) live Streaming (HLS) manifest transmitted over HTTP.
    iii. dynamic adaptive streaming over HTTP (DASH) media presentation description (MPD) descriptors, for example as used in DASH and transmitted over HTTP.
    iv. RTP header extensions, for example as used during RTP streaming.
    v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1.  A method comprising:

    obtaining at least two prediction blocks for a current block of an image, wherein at least one of the at least two prediction blocks is obtained using a block vector-based prediction;
    blending the at least two prediction blocks to provide a predicted block, wherein the blending uses blending weights determined from a template of the current block;
    decoding the current block based on the predicted block.

2.  The method of claim 1, wherein:

    a prediction mode of one of the at least two prediction blocks is one of an Intra Block Copy BVP prediction mode that uses a Block Vector Predictor from a first candidate list and a block vector difference or an Intra Block Copy merge prediction mode that uses a Block Vector from a second candidate list, and
    a prediction mode of another of the at least two prediction blocks is one of: Intra Block Copy BVP prediction mode, Intra Block Copy merge prediction mode, Intra Prediction Mode, Inter prediction mode, or Combined Intra-Inter Prediction mode.

3.  The method of claim 1, wherein a prediction mode of the current block is a geometric prediction mode splitting the current block into two partitions and the two prediction blocks are obtained for the two partitions of the current block.

4.  The method of claim 3, wherein a prediction mode of a first partition among the two partitions is one of an Intra Block Copy BVP prediction mode or an Intra Block Copy merge prediction mode and a prediction mode of a second partition among the two partitions is one of Intra Block Copy BVP prediction mode, Intra Block Copy merge prediction mode, Intra prediction mode, or Inter prediction mode.

5.  The method of any of claims 1-4, further comprising decoding, at a block level, a syntax element indicating whether the blending weights are determined from a template of the current block or using fixed blending weights.

6.  The method of claim 5, wherein the syntax element is decoded responsive to a determination that a size of the current block is larger than a given value.

7.  The method of claim 3, wherein responsive to determination that the two partitions are obtained using block vector-based predictions, blending weights are determined from a template of the current block, otherwise blending weights are determined using fixed weights.

8.  The method of any of claims 3-7, further comprising:

    building at least one candidate list for the current block by pairing a first prediction mode index from a first candidate list obtained for the first partition and a second prediction mode index from a second candidate list obtained for the second partition,
    decoding an index signaling a candidate in the at least one candidate list, wherein the at least two prediction blocks are obtained using the first prediction mode index and the second prediction mode index paired by the candidate signaled by the index.

9.  The method of claim 8, wherein the at least one candidate list comprises a first candidate list pairing two Intra Block Copy merge candidates and a second candidate list pairing an Intra Block Copy merge candidate and an Intra Prediction Mode candidate, the method further comprises decoding a flag indicating which one of the first candidate list or of the second candidate list to use.

10. The method of claim 1, wherein a syntax element indicates whether the blending weights are determined from a template of the current block or using fixed blending weights and wherein responsive to a determination that the block vector-based prediction is obtained from an Intra Block Copy merge prediction mode, the syntax element is inherited from a block vector merge candidate that provides the block vector-based prediction or from neighboring blocks of the current block that are coded using a combination of Intra Block Copy prediction mode and Combined Intra-Inter Prediction mode.

11. The method of claim 1, wherein responsive to a determination that the current block is coded using a prediction that combines an Intra Block Copy prediction mode and a Combined Intra-Inter Prediction mode, determining whether the blending weights are determined from a template of the current block or are fixed blending weights depends on a determination that the Intra Block Copy prediction mode is obtained from an Intra Block Copy merge mode or an Intra Block Copy BVP mode.

12. The method of claim 1, wherein a syntax element indicates whether the blending weights are determined from a template of the current block or using fixed blending weights and wherein responsive to a determination that the current block is coded using a combination of two block-vector-based predictions and one of the two block vector-based predictions is obtained from a block vector merge candidate, the syntax element is inherited from the block vector merge candidate.

13. The method of claim 12, wherein the syntax element is set to true if a same syntax element from the block vector merge candidate is true, otherwise the syntax element is inherited from neighboring blocks of the current block that are coded using a combination of an Intra Block Copy prediction mode and an Intra Block Copy merge prediction mode.

14. The method of claim 12, responsive to a determination that the current block is coded using a prediction that combines two block-vector-based predictions and at least one of the two block vector-based predictions is obtained from a block vector merge candidate, determining whether the blending weights are determined from a template of the current block or are fixed blending weights depends on a determination that the other of the two block vector-based predictions is obtained from a block vector merge candidate or a block vector non merge candidate.

15. The method of any one of claims 1-14, wherein determining the blending weights from a template of the current block is based on a regression-based method wherein blending weights are modeled as an affine linear function of sample positions in the template.

16. An apparatus comprising one or more processors configured to implement the method of any one of claims 1-15.

FIG. 1

**FIG. 2**

**FIG. 3**

EP 4 773 600 A1

**FIG. 4**

**FIG. 5**

**FIG. 6**

EP 4 773 600 A1

FIG. 7

800

List of regular GPM
candidates

↓

| Extract the list of candidates with at least L0 reference: LC0 | 810 |

↓

| Extract the list of candidates with at least L1 reference: LC1 | 820 |

↓

i ++

| (idx0,idx1) = Z-scan LC0, LC1 ( i ) | 830 |

↓

840

Check (idx0,idx1) or (idx1,idx0) not in LP — no →

↓ yes

| Add (idx0,idx1) in LP | 850 |

↓

List of RGPM
candidates

| L0 \ L1 | 0 | 2 | 3 | 5 | 6 | 860 |
|---|---|---|---|---|---|---|
| 1 | | | | | | |
| 4 | | | | | | |
| 7 | | | | | | |

870

| L0 \ L1 | 0 | 1 | 2 |
|---|---|---|---|
| 0 | | | |
| 2 | | | |

# FIG. 8

RGPM flag

*false*          *true*

Blending area size
Splitting direction
GPM index-0
GPM index-1

RGPM cand. index

# FIG. 9

SGPM flag

*true*

SGPM index          *or*

SGPM candidate

*intra mode1*
*intra mode2*
*partition mode*

RSGPM candidate

*intra mode1*
*intra mode2*
*blending matrices*

# FIG. 10

1100

```
┌─────────────────────┐
│  Obtaining prediction │  1110
│  blocks with at least one │
│  BV-based            │
└─────────────────────┘
          │
          ▼
┌─────────────────────┐
│  Determining blending │  1120
│  weights             │
└─────────────────────┘
          │
          ▼
┌─────────────────────┐
│  Blending predictions │  1130
└─────────────────────┘
          │
          ▼
┌─────────────────────┐
│  Encoding/Decoding a  │  1140
│  current block        │
└─────────────────────┘
```

# FIG. 11

1200

```
                    ┌─────────────────────┐
                    │  Obtaining prediction │  1210
                    │  blocks with at least one │
                    │  BV-based            │
                    └─────────────────────┘
                              │
                              ▼
                    ┌─────────────────────┐
              yes   │  Use regression-based │  1220    no
        ┌───────────│  blending weights ?   │───────────┐
        │           └─────────────────────┘           │
        │                                              │
        ▼                                              ▼
┌─────────────────────┐  1230              ┌─────────────────────┐
│  Determining regression-│                │  Blending predictions using │  1250
│  based blending weights │                │  regular-based blending │
└─────────────────────┘                    │  weights             │
        │                                   └─────────────────────┘
        ▼                                              │
┌─────────────────────┐  1240                          │
│  Blending predictions using │                        │
│  regression-based blending │                          │
│  weights             │                                │
└─────────────────────┘                                │
        │                                               │
        └──────────────────┬────────────────────────────┘
                           ▼
                ┌─────────────────────┐  1260
                │  Encoding/Decoding a  │
                │  current block        │
                └─────────────────────┘
```

# FIG. 12

RGPM_IBC flag

*false*    *true*

Blending area size
Splitting direction
GPM index-0
GPM index-1

RGPM_IBC cand. index

# FIG. 13

| GPM_0 / GPM_1 | 0 | 1 | 2 | 3 | 4 |
|---|---|---|---|---|---|
| 0 | RGPM_IBC_0 | RGPM_IBC_1 | RGPM_IBC_5 | RGPM_IBC_6 | |
| 1 | RGPM_IBC_2 | RGPM_IBC_4 | RGPM_IBC_7 | | |
| 2 | RGPM_IBC_3 | | | | |

# FIG. 14

1500

1510

Use regression-based
blending weights ?

yes            no

1520

Building RGPM-IBC
candidate list

1530

Obtaining prediction
blocks from a candidate in
RGPM-IBC candidate list

1560

Obtaining prediction
blocks

1540

Determining regression-
based blending weights

1550

Blending predictions using
regression-based blending
weights

1570

Blending predictions using
regular-based blending
weights

1580

Encoding/Decoding a
current block

# FIG. 15

A ← → NET ← → B

# FIG. 16

| H | PAYLOAD |
|---|---------|

# FIG. 17

RIBC flag

*false*                    *true*

IBC-GPM flag                          RIBC cand. index

*true*          *false*

Blending area size          IBC-CIIP flag
Splitting direction
GPM index-0        *true*          *false*
GPM index-1

IBC index                    Bi-predictive IBC merge flag
Intra index
*true*              *false*

IBC index-0                    IBC index-0
IBC index-1                    IBC index-1
BVD

**FIG. 18**

EP 4 773 600 A1

FIG. 19

FIG. 20

Europäisches
Patentamt
European
Patent Office
Office européen
des brevets

# EUROPEAN SEARCH REPORT

**Application Number**

EP 25 30 5011

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/213104 A1 (MEDIATEK INC [CN]) 17 October 2024 (2024-10-17) | 1-14,16 | INV. H04N19/105 |
| Y | * paragraph [0031] * * paragraph [0113] - paragraph [0114] * * paragraphs [0164], [0165], [0172] * ----- | 15 | H04N19/11 H04N19/176 H04N19/593 |
| Y | WO 2024/149384 A1 (MEDIATEK INC [CN]) 18 July 2024 (2024-07-18) * paragraphs [0078], [0082] * ----- | 15 | |
| Y | LI (ALIBABA-INC) X ET AL: "EE2-2.15: Regression-based SGPM blending", 36. JVET MEETING; 20241101 - 20241108; KEMER; (THE JOINT VIDEO EXPLORATION TEAM OF ISO/IEC JTC1/SC29/WG11 AND ITU-T SG.16 ), , no. JVET-AJ0112 1 November 2024 (2024-11-01), XP030325916, Retrieved from the Internet: URL:https://jvet-experts.org/doc_end_user/ documents/36_Kemer/wg11/JVET-AJ0112-v2.zip JVET-AJ0112.docx [retrieved on 2024-11-01] * abstract * ----- | 15 | |

**TECHNICAL FIELDS SEARCHED (IPC)**

H04N

The present search report has been drawn up for all claims

| Place of search | Date of completion of the search | Examiner |
|---|---|---|
| Munich | 23 June 2025 | Vaquero, Raquel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 30 5011

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2025

| Patent document cited in search report | Publication date | Patent family member(s) | Publication date |
|---|---|---|---|
| WO 2024213104 A1 | 17-10-2024 | NONE | |
| WO 2024149384 A1 | 18-07-2024 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **Y. WANG** ; **K. ZHANG** ; **L. ZHANG**. Non-EE2: Geometry partitioning mode with inter prediction and intra block copy. *JVET-AH0091, 34th Meeting, Rennes, FR*, 17 April 2024

- **P. BORDES** ; **K. REUZÉ** ; **F. GALPIN** ; **F. URBAN** ; **K. NASER** ; **F. LE L6ANNEC** ; **E. FRANCOIS**. EE2-2.11: Regression-based GPM blending (tests a,b,c). *JVET-AG0112, 33rdJVET Meeting*, 17 January 2024
- **X. LI** ; **R. LIAO** ; **J. CHEN** ; **Y. YE**. Non-EE2: Regression-based SGPM blending. *JVET-A10102, 35th Meeting, Sapporo, JP*, 12 July 2024